# EUROPEAN PATENT SPECIFICATION

(11) **EP 0 326 574 B1**
(45) Date of publication and mention of the grant of the patent: **02.03.1994**
(21) Application number: 87906876.5
(22) Date of filing: 24.09.1987
(51) Int. Cl.: G02B 27/14

(54) **HEAD-MOUNTED DATA DISPLAY**
AUF DEM KOPF GETRAGENE DATENANZEIGE
DISPOSITIF D'AFFICHAGE DE DONNEES PORTE SUR LA TETE

(30) Priority: 25.09.1986 US 911573; 10.04.1987 US 36826
(43) Date of publication of application: 09.08.1989
(60) Divisional application: 93202456.5
(73) Proprietor: INSIGHT, INC., Kirkland, WA 98083 (US)
(72) Inventor: PURDY, Peter, K., Kirkland, WA 98083 (US); BEACH, Kirk, W., Seattle, WA 98122 (US)
(74) Representative: Cross, Rupert Edward Blount
(86) International application number: PCT/US87/02455
(87) International publication number: WO 88/02494

(56) References cited:
- EP-A- 0 066 402
- EP-A- 0 125 108
- EP-A- 0 162 646
- BE-A- 888 027
- US-A- 3 787 109
- US-A- 3 923 370
- US-A- 4 190 832
- US-A- 4 262 537
- US-A- 4 361 384
- US-A- 4 414 548
- US-A- 4 465 347
- US-A- 4 546 650
- ELEKTROTECHNIK UND MASCHINENBAU, vol.99, no.3, March 1982, Wien, AT W.F. OEVE: "Mikroprezessoranwendung in Forschung und Lehre - Elektronik für Sportmessung"
- PROCEEDINGS OF THE SID, vol.23, no.2, 1982, pages 77-80, Los Angeles, CA, US; H.W. UPTON et al.: "Eyeglass Heads-Up-Display"

## Description

### Technical Field

This invention relates to speedometers and odometers and to data display systems. More specifically, this invention relates to a speedometer-odometer for a skier or other moving sportsman and to a head-mounted display for the speed-distance information. The display also can be used for other types of data of interest to the wearer.

### Background Art

Moll U.S. Patent No. 3,505,878, issued April 14, 1970, discloses a "Speed and Distance Indicator for a Ski Device". Jander et al. U.S. Patent No. 4,262,537, issued April 21, 1981, discloses a "Speedometer and/or Odometer for Skiers". Cameron U.S. Patent No. 4,546,650, issued October 15, 1985, discloses a "Speed and Distance Calculator for Skis". Each of the devices described in these patents uses one or more wheels mounted on the ski for rotation about a horizontal axis and rotated by contact with the medium over which the ski is traveling, namely, the snow or water, and a speed indicator or display incorporated in the ski-mounted unit.

EP-A-0 066 402 shows night vision goggles attached to a pilot's helmet wherein the goggles include on eyepiece that is disposed in the user's direct line of sight. An optical system picks up an outside image and presents the image to on image intensifier which in turn directs an image to the eyepiece. United States Patent 4,465,347 shows a helmet-mounted telescope that picks up an outside image which is directed to a visor via a first lens, a shutter, fiber optics and a second lens. The portion of the visor through which the user views the image is directly in the user's field of view. U.S. Patent 4,361,384 shows a display system having a combiner that is directly in the user's field of view, the combiner receiving information from numerous elements disposed in a housing that is positioned between a display or face plate and the combiner. United States Patent 3,923,370 shows a helmet-mounted display system having a CRT that projects an image onto a first reflective surface which projects an image onto a mirror which in turn projects an image onto a second reflective surface for viewing by a user. The second reflective surface is in the user's direct line of sight. United States Patent 3,787,109 shows a helmet-mounted display system having a light emitter that projects on image onto a mirror that is in turn projected onto a partially reflecitve visor. The portion of the visor through which the user views the image is in the user's direct line of sight. A publication entitled "Eyeglass Heads Up Display", Proceedings of the SID, Vol. 23, No. 2, 1982, pages 77-80, shows a heads up display system with a mirror for viewing an image where the mirror is in the user's direct line of sight, the mirror receiving an image from a folding mirror and not directly from a display.

### Disclosure of the Invention

In accordance with the present invention, the disadvantages of prior heads up display systems have been overcome. The display system of the present invention is used for a head mounted viewing transparency having a frame or other means for supporting the transparency to mount the transparency on a user's head. A display is mounted on the support means and is used with a device for generating data representing information to be depicted on the display. The display system of the present invention which is defined by claim 1 is characterized by a mirror for collimating light to project an image of the displayed information at a distance from the user in the periphery of the user's field of view wherein the mirror receives the information directly from the display, the mirror being positioned in the periphery of the user's field of view to allow the user to view the image by looking at the mirror.

### Brief Description of the Drawings

Figure 1 is a very diagrammatic, fragmentary, top perspective of a snow ski having components of a speed sensor.

Figure 2 is an enlarged diagrammatic side elevation of a portion of the ski of Figure 1, with parts shown in section.

Figure 3 is a diagrammatic side elevation corresponding to Figure 2 illustrating an alternative form of a speed sensor.

Figure 4 is a diagrammatic perspective of a skier having another form of a speed sensor and also a head-mounted data display which may embody the present invention.

Figure 5 is a somewhat diagrammatic top perspective of the speed sensor shown in Figure 4.

Figure 6 is a block circuit diagram of the speed sensor.

Figure 7 is a block circuit diagram of a modified form of speed sensor.

Figure 8 is a block circuit diagram of a further modified form of speed sensor.

Figure 9 is a diagrammatic side elevation illustrating possible components of the head-mounted data display shown in Figure 4.

Figures 10 and 11 are corresponding perspectives of different embodiments of head-mounted data displays in accordance with the present invention such as would be incorporated in goggles for a skier.

Figure 12 is a diagrammatic rear perspective of another embodiment of head-mounted data display embodying the invention as incorporated in a mask such as would be used by a scuba diver.

Figure 13 is a diagrammatic rear perspective of another arrangement of head-mounted data display but not embodying the present invention.

Figure 14 is a diagrammatic top plan of another embodiment of head-mounted data display in accordance with the present invention utilizing a segment of a parabolic reflector; and Figure 15 is a diagrammatic perspective of the reflector used in the embodiment of Figure 14, illustrating the surface of revolution of which such reflector is a segment.

Figure 16 is a diagrammatic rear perspective of still another embodiment of a head-mounted data display in accordance with the present invention; and Figure 17 is a very diagrammatic side elevation of components of the display of Figure 16 with parts deleted.

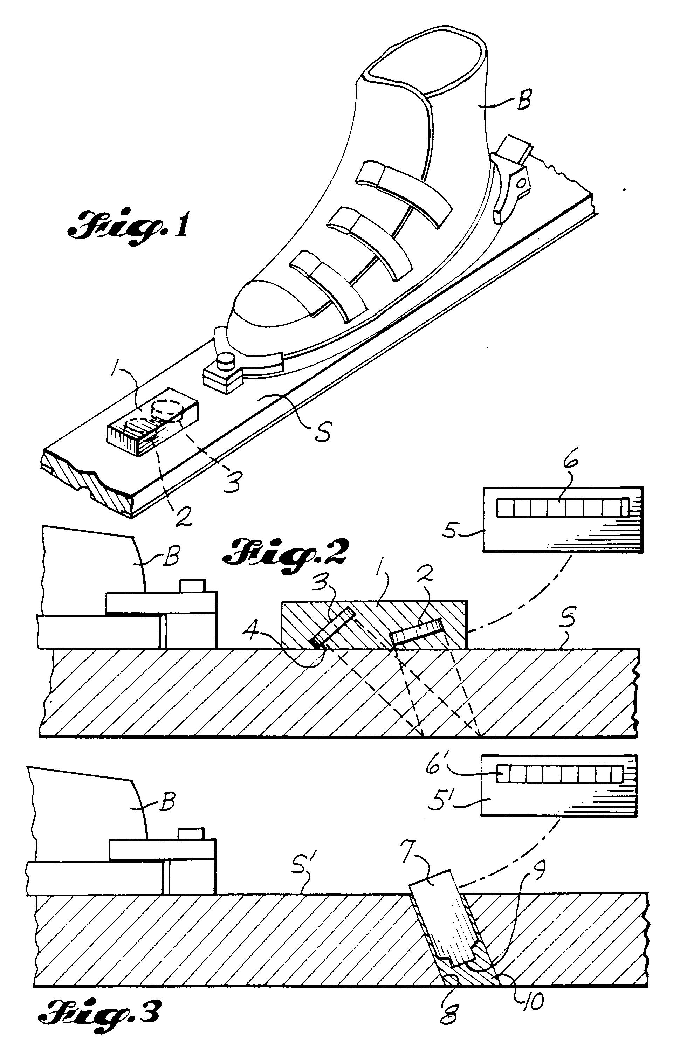

In the arrangements shown in Figures 1 and 2, the speed sensor includes a block 1 mounted on the top surface of a snow ski S having the usual bindings for a ski boot B. As best seen in Figure 2, the block 1 mounts a transducer 2 stationarily relative to the ski S for transmitting ultrasonic waves of a known, preferably constant, frequency downward through the block and also through the ski itself. In the illustrated arrangement, the ultrasound waves are transmitted downward and forward at a small acute angle to vertical.

A receiving transducer 3 is mounted rearward from the transmitting transducer 2 in the block 1. Ultrasonic waves reflected from the medium over which the ski is traveling impinge on the flat bottom face 4 of the receiving transducer 3 which generates a corresponding electrical signal. Preferably, the flat bottom face 4 of the receiving transducer 3 is positioned perpendicular to waves reflected at the bottom of the ski. As illustrated in broken lines in Figure 2, waves perpendicular to the transducer faces at their opposite side edges intersect, respectively, precisely at the bottom of the ski. In the arrangement shown, the receiving transducer is inclined more sharply than the transmitting transducer.

Given the known angles of the transmitting and receiving transducers 2 and 3 and the known constant frequency of the transmitted ultrasound waves, the speed of the ski relative to the stationary supporting medium can be calculated once the frequency of reflected waves is detected. Preferably, the calculation is performed by a computer 5 having a readout or display 6 and mounted on the ski. Optionally, the computer can be mounted on the ski boot and have a conveniently detachable cable connectible to the transducer block 1. The computer also could be carried by the skier, in which case the readout could be a separate unit mounted, for example, on a wrist band or in the skier's helmet or goggles. The transducers and the detecting-calculating mechanism can be similar to that used in medical Doppler blood flowmeters.

The computer is programmed to calculate the speed of the ski relative to the supporting medium and display it on the readout 6. Preferably the computer has an internal clock so that optionally or additionally distance traveled also can be displayed. The computer can be provided with memory and programmed to display current speed, average speed, maximum speed, current acceleration, maximum acceleration, trip distance, cumulative distance, trip time, total or cumulative time, air time (i.e., the time for which the ski bottom was not in contact with the supporting medium) or time of day.

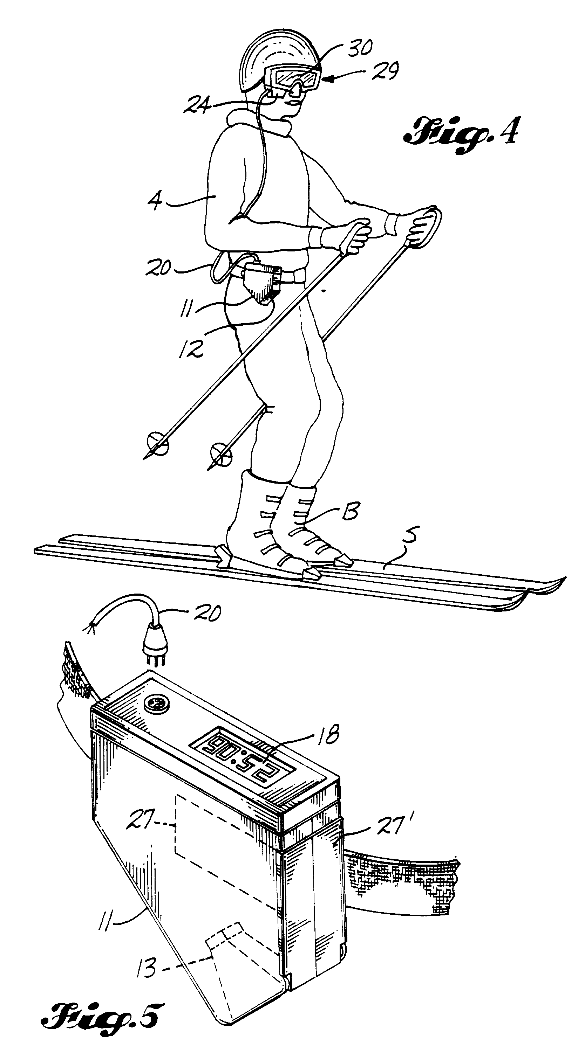

In the alternative arrangement shown in Figure 3, a single transducer 7 is mounted in a cavity 8 in the ski S'. Such transducer is of the "pulsed-Doppler" type, alternately transmitting ultrasonic waves and receiving reflected waves. Its transmitting-receiving face 9 is angled downward and forward. The bottom portion of the cavity can be filled with a suitable medium 10 for conducting ultrasonic waves such that the form shown in Figure 3 is particularly adapted to a ski of a type which will not otherwise transmit ultrasonic waves. The computer 5' with readout 6' controls the transducer and performs the calculations as in the previously described embodiment.

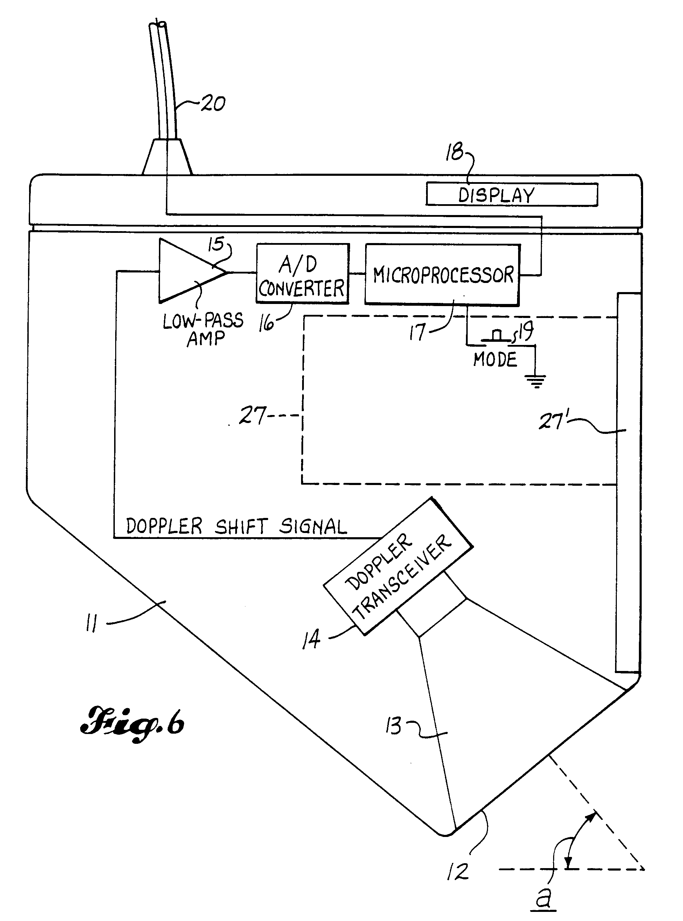

While the arrangements shown in Figures 1, 2 and 3 use ultrasound transducers, the alternative arrangements shown in Figures 4 and 5 utilizes an electromagnetic wave transceiver which is portable and mounted in a small casing 11. The casing, in turn, is mountable on a ski S, a ski boot B or on the skier or other user U. As seen in Figure 4, the casing can be carried by a belt for attachment to the skier approximately waist high. The position of the casing 11 should be substantially constant.

The transceiver preferably includes an oscillator transmitting waves in the superhigh or extremely high frequency range, such as between 3 gigahertz and 100 gigahertz. In a representative embodiment, the oscillator can be a negative resistance diode oscillator of the general type described in the article titled "Modulation Schemes in Low-Cost Microwave Field Sensors" beginning at page 613 of IEEE TRANSACTIONS ON MICROWAVE THEORY AND TECHNIQUES, VOL. MTT-31, NO. 8, AUGUST 1983, available from the Institute of Electrical and Electronics Engineers. See also the references to that article listed at page 623. Such article and references are expressly incorporated by reference herein.

The casing 11 contains a lower leading edge portion 12 from which waves are transmitted downward and forward through the air. As represented in Figure 6, such waves can be transmitted by the transceiver 14 through the wave guide antenna 13, which is also shown diagrammatically in broken lines in Figure 5, at a range of angles relative to horizontal for which the median angle is perpendicular to the casing end edge 12. In the preferred form, the median transmission angle is 45 degrees. Waves backscattered from the ground pass through the wave guide antenna to impinge on the diode which can serve as both the oscillator of the transmitter and as a mixer in the receiver. A "Doppler shift signal" indicative of the difference between the transmission frequency and the frequency of the received backscattered waves is fed to a low-pass amplifier 15. In a representative form utilizing a transmission frequency of 24.125 gigahertz, the Doppler shift signal fed to the low-pass amplifier will have a median frequency of about 50 hertz times the actual speed of the skier relative to the ground in miles per hour.

The cutoff frequency of the low-pass amplifier 15 is selected to eliminate high-frequency noise, such as noise of a frequency higher than the maximum possible speed of the skier.

The signal from the low-pass amplifier 15 is fed to an analog to digital converter 16 for processing by a microprocessor 17. Representative of the conventional microprocessor which can be used is the Intel 80C51. The microprocessor is programmed for frequency analysis of the digitized input signal. For example, the microprocessor can be programmed to apply a fast Fourier transform frequency analysis of the digitized input signal frequencies to calculate the energy of discrete frequency components. The backscattered received waves are composed of signal energies coming from different angles and, consequently, result in a nonmonochromatic Doppler shift signal, just as the angles of transmitted waves relative to the skier and the ground encompass a range of angles. Nevertheless, the median-transmitted angle is known, namely, 45 degrees in the preferred embodiment, and the microprocessor is programmed to calculate the median "shifted" frequency of the incoming digital signal from the converter 16, that is, the frequency for which one-half of the total incoming energy results from components of higher frequencies and one-half results from components of lower frequencies. Such median shifted frequency is used to calculate an approximation of the actual speed in accordance with Doppler techniques. The microprocessor then actuates a display 18 which can be, for example, an LCD or LED display carried by the casing 11 as seen in Figure 5.

A switch 19 represented in Figure 6 can be provided for selecting different modes of the microprocessor for displaying other information such as distance traveled, elapsed time, average speed, time of day and so on. Power can be supplied by batteries carried in a cavity 27 of the casing 11 accessible by opening a door 27'.

Speed, distance and related information is of interest to sportsmen other than Alpine skiers, and modifications in the microprocessor programming can adapt the speed sensor in accordance with the present invention for other sportsmen. For a Nordic or cross-country skier with a speed sensor of the general type represented in Figure 6 but mounted on the skier's boot or ski, there would be some rearward motion in addition to forward motion. The microprocessor can be programmed in conjunction with an inertia switch or direction sensitive Doppler elements to calculate and display aggregate forward distance by subtracting the reverse motion component and, similarly, can be programmed to display average forward speed over a desired period. A runner or hiker may be as interested in distance and average speed rather than instantaneous speed and the microprocessor can be programmed to calculate that information and actuate the display on demand.

In the speed sensor embodiment shown in Figure 6, the microprocessor is programmed to calculate the approximate forward velocity of the speed sensor unit 11 relative to the surrounding medium by assuming a known, substantially constant, median transmission angle a. In practice, it may be difficult to position the speed sensor casing 11 so as to have a median angle of transmission precisely equal to the angle assumed by the microprocessor. In some applications, the actual median angle of transmission may change as the user assumes different postures. Consequently, for a more accurate determination of the actual forward velocity, the speed sensor unit can be modified to compute the actual velocity taking into consideration changes in the median transmission angle a.

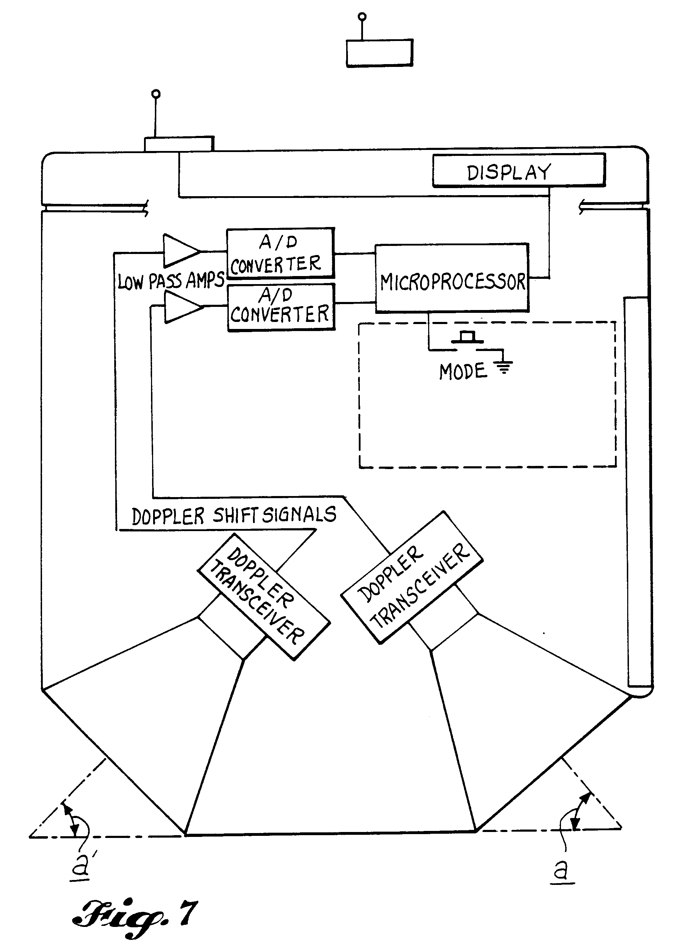

For example, in the modified form for which the circuit is shown diagrammatically in Figure 7, the casing 11' accommodates two identical Doppler transceivers 14' each having its own waveguide antenna 13'. The transceivers and their antennas are mounted stationarily relative to the casing 11'. Consequently, the difference in transmission angles is known and constant. In the arrangement shown in Figure 7, one assembly of transceiver and waveguide antenna is positioned for transmitting waves downward and forward at a median transmission angle a of 45 degrees when the casing 11' is maintained in the precise position shown. With the casing in such position, the other assembly of Doppler transceiver and waveguide antenna transmits waves at a median transmission angle a' of 45 degrees downward and rearward, i.e., 90 degrees minus the other angle a. If the casing 11' is maintained precisely in the position shown, the amount of frequency shift detected by one assembly will be the same as the amount of frequency shift detected by the other assembly. In one instance the detected backscattered waves will have a higher frequency than the transmission frequency, and in the other instance the detected backscattered waves will have a frequency lower than the transmission frequency.

If, however, the casing is canted such that the median transmission angles a and a' of the two assemblies are different, the detected frequency shift will be different for the two transceiver assemblies. The actual forward velocity along the supporting medium is, of course, always the same for each assembly, and since the difference in transmission angles is known $\text{(} {\text{a}}_{̲} \text{' = 90°-} {\text{a}}_{̲} \text{)}$ the actual forward velocity can be calculated by analyzing the separate Doppler shift signals fed, respectively, to the separate low-pass amplifiers 15' and analog-to-digital converters 16' before being fed to the microprocessor 17 for analysis and calculation of the actual velocity which is shown on the display 18.

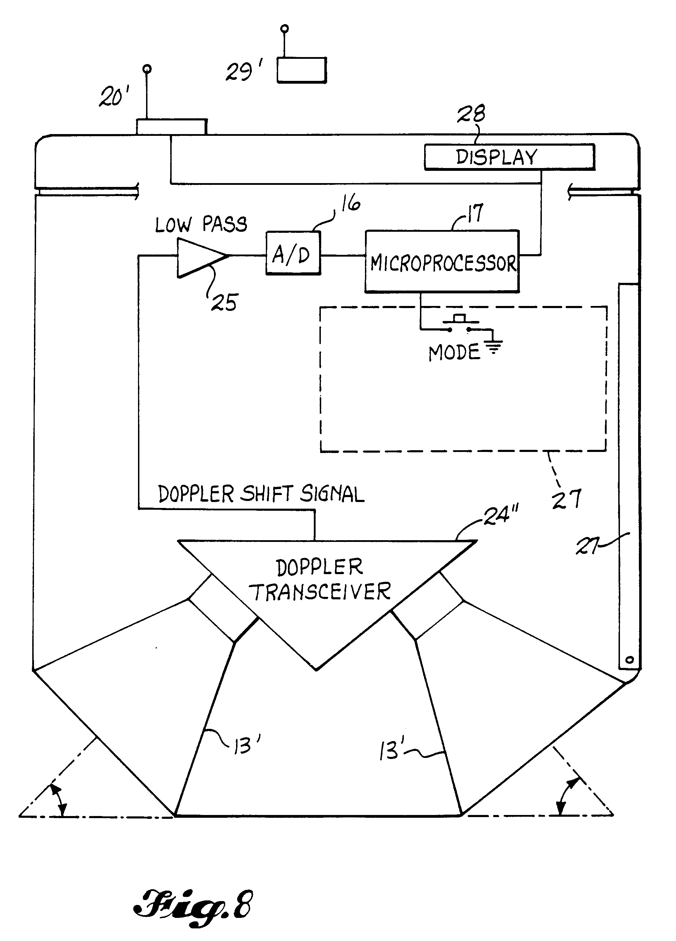

In the further modified form of speed sensor for which the circuit diagram is shown diagrammatically in Figure 8, a single Doppler transceiver 14'' transmits waves through the separate, oppositely inclined waveguide antennas 13' and detects reflected waves. A single diode or diode assembly can be used for wave transmission and detection. The single Doppler shift signal fed to the computer contains information on the higher and lower frequency shifted components received through the different waveguide antennas which, after filtering and analog to digital conversion, is analyzed by the microprocessor 17 for comparison and calculation of the actual speed.

Preferably, the microprocessor 17 updates the display 18 periodically, such as once each second. Also, in the preferred embodiment, operation of the Doppler transceiver or transceivers is not constant. Rather, the transceiver or transceivers are actuated for short but uniform periods separated by much longer, uniform intervals. In a representative form, the transceiver or transceivers can be actuated for approximately 50 milliseconds twice each second. During each such period of actuation, the microprocessor computes essentially the instantaneous speed with reference to the detected Doppler shift. When the display is updated, the value shown preferably is the average of the last several calculated speeds, such as the average of the last three speeds detected during the previous three short, uniformly spaced, sampling periods. Consequently, the display always shows an average of a plurality of substantially instantaneous speeds detected during short, discrete time periods separated by longer intervals. During the much longer periods of nonactuation of the transceiver or transceivers, little power is used which greatly increases the battery life.

With reference to Figures 4 and 5, in lieu of or in addition to the unit-mounted display 18, the microprocessor can supply the data signal to a remote display such as through a cable 20 to goggles 29 shown in Figure 4. With reference to Figures 7 and 8, alternately the data signal can be transmitted, such as by an antenna 20', to a user-mounted display or to a stationary display or receiving device 29' which could be positioned adjacent to a race course, for example. Nevertheless, in an arrangement which can embody the present invention, the remote display is incorporated in eye wear or headgear, such as the goggles 29, so as to be movable with the viewer's head. The basic components carried by the eye wear or headgear are best seen in Figure 9. In such system there is a transmissive, white, diffusing filter 21 exposed to ambient light and adjacent to a conventional internal backing 22 for a liquid crystal plate 23. Preferably, such plate is in transmissive mode so that, when driven, data characters are transparent on a dark background. Ambient light then acts as an auto-contrast control because the brighter the ambient light, the brighter the characters will appear. Alternatively, the filter, backing and liquid crystal plate can be replaced by active elements such as light-emitting diodes, but a liquid crystal display in transmissive mode is preferred.

Elements 21, 22 and 23 are carried by the eye wear or headgear out of the field of vision of the user such as in a lower goggle extension 24 shown in Figure 4. The image of the display is viewable in a flat reflector 25 located above the user's eye outside the usual forward or forward and downward direct line of vision but within the peripheral field of view and easily seen. The head-mounted construction is extremely convenient because it allows data to be viewed without movement of the head and with at most only momentary distraction from the desired direct line of sight. There can be a complication because of the necessarily close positioning of the reflector 25 to the eye such that the eye does not easily change focus from the background to the closer displayed characters and back again. Preferably there is an optical element such as a lens 26 to increase the apparent optical distance of the characters from the eye to at least several times the actual physical distance of the path from the eye to the reflector to the display. The apparent optical distance to the characters should be at least 10 inches to 12 inches (25.40 cm 30.48 cm) but less than infinity in front of the eye. The projection of the characters to such distance makes focusing much easier and quicker and less tiring to the eye. Placing the characters at a great distance allows viewing the characters with little focal adjustment of the eye.

In addition, preferably the reflector is semitransparent such as a half-silvered mirror or a pellicle of the type used for beam splitting. The result is that the reflected display characters are clearly visible, but the background is not completely obscured. When used in the preferred method of incorporation into eye wear having a darkened or polarized or tinted front lens 30, the data characters appear to be projected onto the background.

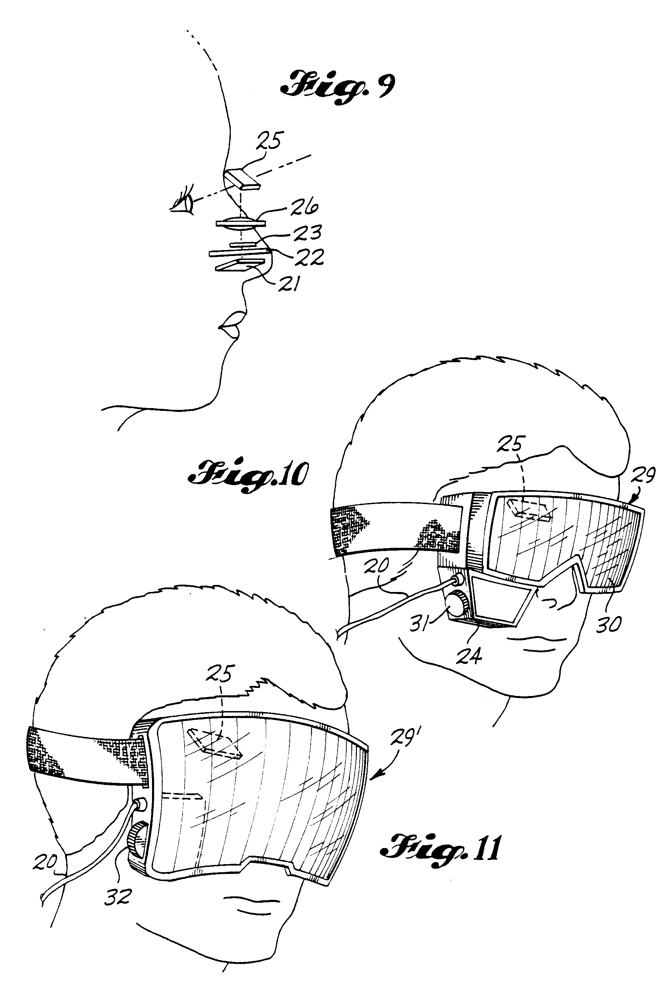

The embodiment illustrated in Figure 10 corresponds to the embodiment shown in Figure 4 where the character-generating elements of the display are carried in the goggle extension 24. The semitransparent planar reflector 25 is mounted toward the top of the goggles 29, inside the outer lens 30, slightly higher than the eye. The elements for increasing the optical distance can be mounted at approximately the junction of the bottom edge of the goggles 29 and the top edge of the extension 24. Button 31 can be used to actuate the microprocessor to change to a desired mode.

In the embodiment shown in Figure 11, all of the display elements are mounted inside the wider goggles 29'. Dial 32 is usable to select the mode and the display characters are viewed on the planar half-silvered mirror or pellicle 25.

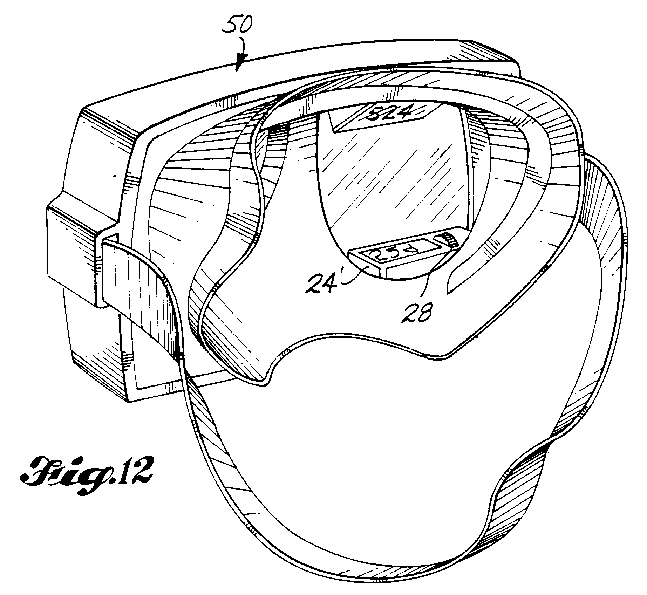

Figure 12 illustrates a display in accordance with the present invention as incorporated in a mask 50 of the type used by scuba divers. As in the embodiment shown in Figure 10, there is a bottom housing 24' containing the character-generating mechanism which, in the case of the embodiment of Figure 12, includes a dial 28 for adjusting the angle of the LCD or LED plate. Data to be displayed can be generated by a remote microprocessor and can including information on the depth or pressure or time of remaining air supply, for example.

Figure 13 illustrates another arrangement which does not embody the invention and more closely resembles a pair of sunglasses than a skier's or sportsman's goggles. The light diffusing filter 21 is positioned at the forward end of one sidepiece 33 of the frame 34. The LCD character generator controlled by the cable 20 from the computer is located immediately adjacent to the filter 21 inside the sidepiece 33. By using several internal planar reflectors 35, 35' and 35'', the length of the path from the character generator to the viewing reflector 25' is increased substantially, as indicated in broken lines. Light enters through the bottom front of the sidepiece 33 and through the transmission LCD plate. From the plate, the passed light travels rearward the full length of the sidepiece to a pair of cooperating planar reflectors 35, then back forward to a central pair 35' positioned to offset the light beams upward. The light proceeds forward and to an additional planar reflector 35'' positioned toward the top of the sidepiece 33 at its front to direct the light substantially horizontally inward. In the embodiment shown in Figure 11, the viewing reflector 25', which still is preferably semitransparent, can be shaped to magnify the image of the display characters for more convenient viewing.

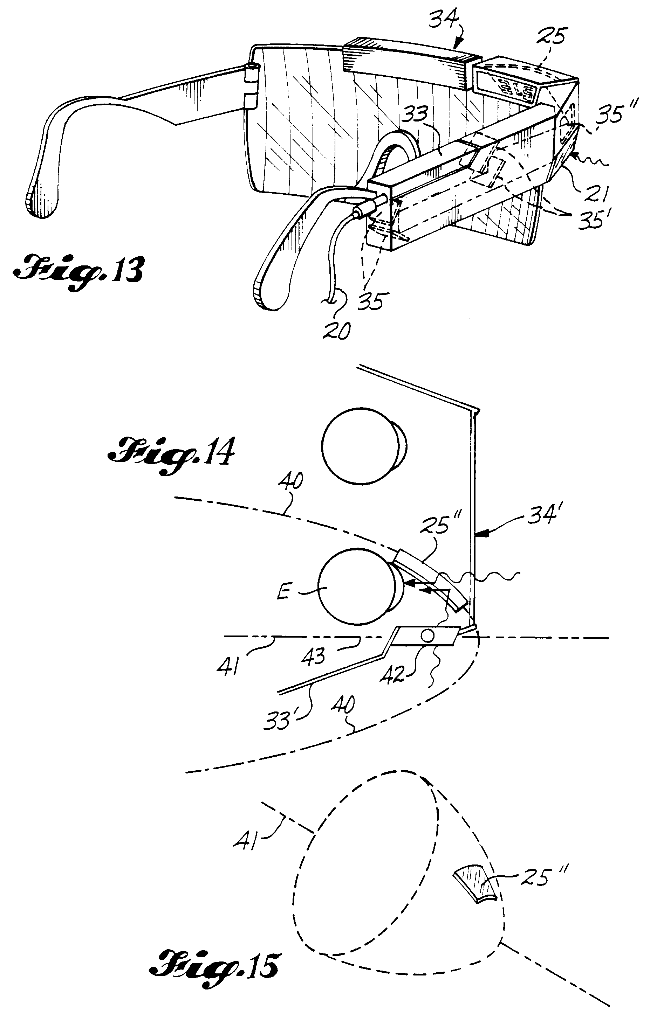

The optical distance from the image of the display generator to the eye also can be increased by using a reflector of complex shape. In the embodiment shown diagrammatically in Figure 14, a horizontal section of the reflector 25'' is a segment of a paraboloid for which an axial section, if more fully complete, would continue along the broken line paths 40. The full reflector surface preferably is a three-dimensional concave segment of the paraboloid formed by rotation of the parabola 40 about the horizontal axis 41 as best seen in Figure 15. Such axis intersects or is closely adjacent to the character generator such as the liquid crystal plate 42 carried on a sidepiece 33' of eye wear 34'. Preferably, the axis 41 of the paraboloid of which the reflector 25'' is a segment intersects the character generator or is closely adjacent to it, and the parabolic focus 43 is close to the character generator but opposite it from the imaginary apex of the paraboloid, in which case the optical distance at which the eye E will focus will be very long, i.e., at least several times the actual length of the patch from the eye to the reflector and then to the character generator.

The reflector can be a short strip positioned slightly above the eye, as in the previously described embodiments. The embodiment shown in Figures 14 and 15 is particularly effective in creating the illusion of projection of the data onto the surrounding background.

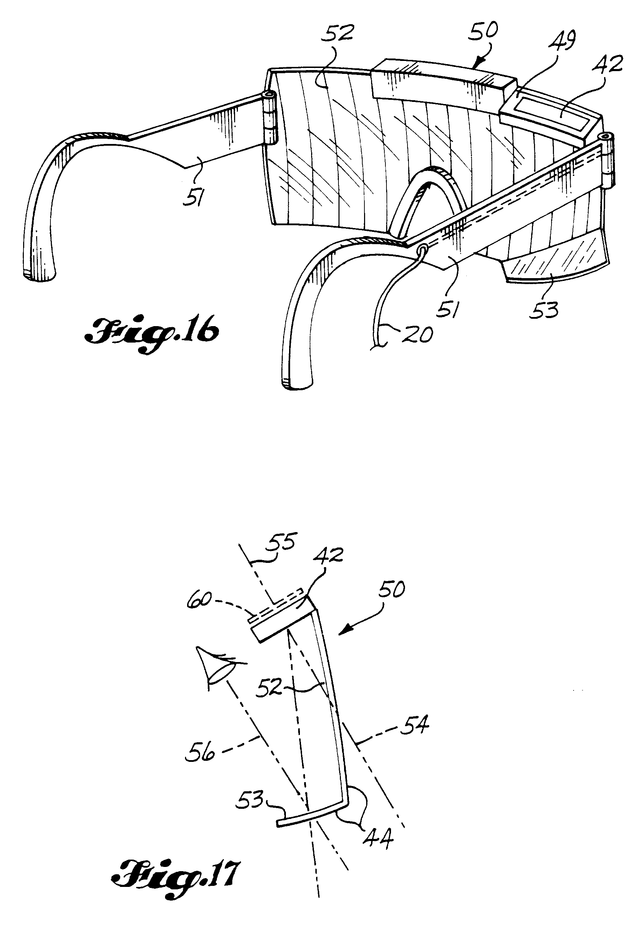

In the modified embodiment shown in Figures 16 and 17, the character generator is a liquid crystal plate 42 carried in a frame 49 extending inward at the top of one side portion of the eyewear 50. Such eyewear includes side pieces 51 connected to the compensating front lens 52 such as a lens darkened or polarized or tinted. The LCD plate is in transmissive mode such that the data characters are transparent and viewed by passage of ambient light through the plate. Substantially directly below the frame 49 carrying the LCD plate, the lens 52 has an inward-projecting parabolic bottom portion 53 which preferably is semireflective and semitransparent. The desired data is viewed in the reflector superimposed on the background.

The geometry of the eyewear 50 is best seen in Figure 17. The inward-projecting bottom portion 53 of the lens 52 preferably is a segment of a paraboloid having the axis 54 and focus 55. Preferably such axis 54 intersects approximately the center of the LCD plate 42 and is approximately parallel to the path 56 from the eye to about the center of the bottom lens portion or segment 53. The focus 55 is close to the LCD plate 42 but opposite such plate from the imaginary apex of the paraboloid. Also, preferably the LCD plate 42 is mounted approximately perpendicular to the axis 54 which requires that it be canted downward from the upper portion of the lens 52 toward the eye at a small acute angle. The overall result is that the LCD display is magnified but appears at a long distance from the eye for easy focusing and is projected on the peripheral field of view.

The visibility of the characters can be increased by the use of color-compensating filter material which can be incorporated in the lens 52 or otherwise such as sheet 44 shown in Figure 17 located at the opposite side of the reflector from the eye. The visual effect is to enhance or remove color components of the background differently from the reflected characters. Preferably, color components of light transmitted through the LCD plate are not filtered so that the display characters are as bright as possible, in which case all color compensation for increasing the visibility of the reflected data is by color filtering elements disposed opposite the semitransparent reflector from the eye.

The form of the invention represented in Figure 17 will provide a bright, easily viewable image of the LCD display in the reflector 53 when ambient light is primarily directed downward from above the eyewear. In a situation where a substantial or major portion of ambient light is generated and directed or reflected from below, light passing through the reflector from below may reduce the contrast of the data characters reflected from above. For such situation it may be desirable to use a totally reflective reflector, which will obscure a portion of the peripheral field of view. Another alternative is to provide a totally reflective mirror 60, shown in broken lines in Figure 17, positioned above the LCD plate 42. The amount of light passing upward through the LCD plate and reflected back down by the mirror 60 will be approximately the same or greater than the light passing upward through the partially transmissive reflector 53 so that approximately the same contrast is maintained for different lighting conditions.

## Claims

1. A display system for a head mounted viewing transparency (30, 30'', 72, 126) that defines a user's field of view, the display system having means (29, 29') for supporting said transparency to mount said transparency on a user's head and a display (24, 24', 42) for displaying information, said display being mounted on said support means and said display system being used with a means for generating data representing information to be displayed, said display system being characterized by: a mirror (25, 25'', 53) for collimating light to project an image of said displayed information at a distance from said user in the periphery of said field of view, said mirror receiving said information directly from said display and said mirror being positioned in the periphery of said field of view to allow said user to view said image by looking at said mirror.

2. A display system for a head mounted viewing transparency as recited in claim 1 wherein the reflectivity of said mirror is partially reflective to maintain a high contrast between the projected image of said displayed information and a scene viewed through said transparency.

3. A display system for head mounted viewing transparencies as recited in claim 1 wherein said mirror projects said image of displayed information at a distance that is less than infinity to allow a user to rapidly visually accommodate said image while performing an activity requiring focusing at less than infinity.

4. A display system for a head mounted viewing transparency as recited in claim 1 wherein said display transmits light to said mirror, said system further including color filtering means for removing color components of the environment viewed through said transparency, said removed color components being different from the color components of the light transmitted from said display means.

5. A display system for a head mounted viewing transparency as recited in claim 4 wherein said color filtering means is disposed on an outer surface of said viewing transparency.

6. A display system for a head mounted viewing transparency as recited in claim 1 wherein said head mounted viewing transparency forms a pair of glasses, said support means forming the frame of said glasses.

7. A display system for a head mounted viewing transparency as recited in claim 6 wherein said mirror means is mounted on said frame.

8. A display system for a head mounted viewing transparency as recited in claim 1 wherein said mirror means and said viewing transparency form a bifocal.

9. A display system for a head mounted viewing transparency as recited in claim 1 wherein said display includes a light transmissive display.

10. A display system for a head mounted viewing transparency as recited in claim 9 wherein said display includes a light diffuser disposed on a side of said transmissive display opposite said mirror said diffuser providing even illumination to said transmissive display.

11. A display system for a head mounted viewing transparency as recited in claim 10 wherein said light diffuser receives ambient light for even distribution to said display.

12. A display system for a head mounted viewing transparency as recited in claim 11 includes means for reflecting light from said diffuser to said display.

13. A display system for a head mounted viewing transparency as recited in claim 10 including an incandescent light source positioned adjacent a side of said light diffuser opposite to the side of said light diffuser that is positioned adjacent to said transmissive display.

14. A display system for a head mounted viewing transparency as recited in claim 13 further including a parabolic mirror positioned to direct the light from said incandescent light source to said light diffuser.

15. A display system for a head mounted viewing transparency as recited in claim 9 including an electroluminescent panel disposed adjacent the side of said transmissive display opposite the side of said display facing said mirror means.

## Patentansprüche

1. Anzeigesystem für eine kopfgehalterte Durchsichtscheibe (30, 30'', 72, 126), die das Sichtfeld des Benutzers definiert, mit Haltemitteln (29, 29') zum Befestigen der Durchsichtsscheibe am Kopf eines Benutzers und einer an den Haltemitteln befestigten Anzeige (24, 24', 42) zum Anzeigen von Information, wobei das Anzeigesystem mit einer Einrichtung zum Erzeugen von die anzuzeigende Information repräsentierenden Daten benutzt wird,
**gekennzeichnet** durch einen Spiegel (25, 25'', 53) zum Kollimieren von Licht zur Projektion eines Bildes der angezeigten Information in einem Abstand vom Benutzer im Randbereich des Sichtfeldes, wobei der Spiegel die Information direkt von der Anzeige empfängt und im Randbereich des Sichtfeldes so angeordnet ist, daß er dem Benutzer die Betrachtung des Bildes durch Blick auf den Spiegel ermöglicht.

2. Anzeigesystem für eine kopfgehalterte Durchsichtsscheibe nach Anspruch 1, wobei das Reflexionsvermögen des Spiegels teilweise reflektierend ist, um einen starken Kontrast zwischen dem projizierten Bild der angezeigten Information und einer durch die Durchsichtscheibe betrachteten Szene zu erhalten.

3. Anzeigesystem für eine kopfgehalterte Durchsichtscheibe nach Anspruch 1,
wobei der Spiegel das Bild der angezeigten Information auf einen Abstand projiziert, der kleiner als unendlich ist, um es einem Benutzer während der Durchführung einer Tätigkeit, die Fokussierung auf weniger als unendlich erfordert, zu erlauben, das Bild nach visuell zu adaptieren.

4. Anzeigesystem für eine kopfgehalterte Durchsichtscheibe nach Anspruch 1, wobei die Anzeige Licht zu dem Spiegel überträgt, das System außerdem Farbfiltermittel zum Entfernen von Farbkomponenten der durch die Durchsichtscheibe gesehenen Umgebung enthält, wobei die entfernten Farbkomponenten sich von den Farbkomponenten des von dem Anzeigemittel übertragenen Lichtes unterscheiden.

5. Anzeigesystem für eine kopfgehalterte Durchsichtscheibe nach Anspruch 4,
wobei die Farbfiltermittel an der Außenfläche der Durchsichtscheibe angebracht ist.

6. Anzeigesystem für eine kopfgehalterte Durchsichtscheibe, in dem die kopfgehalterte Durchsichtscheibe eine Brille bildet, wobei die Haltemittel das Brillengestell bilden.

7. Anzeigesystem für eine kopfgehalterte Durchsichtscheibe nach Anspruch 6,
wobei der Spiegel an dem Gestell angebracht ist.

8. Anzeigesystem für eine kopfgehalterte Durchsichtscheibe nach Anspruch 1,
wobei der Spiegel und die Durchsichtscheibe eine bifokale Brille bilden.

9. Anzeigesystem für eine kopfgehalterte Durchsichtscheibe nach Anspruch 1,
wobei die Anzeige ein lichtdurchlässiges Display enthält.

10. Anzeigesystem für eine kopfgehalterte Durchsichtscheibe nach Anspruch 9,
wobei die Anzeige einen Lichtdiffusor enthält, der an einer dem Spiegel gegenüberliegenden Seite des lichtdurchlässigen Displays angebracht ist, wobei der Diffusor gleichmäßige Beleuchtung des durchlässigen Displays schafft.

11. Anzeigesystem für eine kopfgehalterte Durchsichtscheibe nach Anspruch 10,
wobei der Diffusor Umgebungslicht zur gleichmäßigen Verteilung auf das Display bewirkt.

12. Anzeigesystem für eine kopfgehalterte Durchsichtscheibe nach Anspruch 11,
mit Mitteln zur Spiegelung von Licht von dem Diffusor zum Display.

13. Anzeigesystem für eine kopfgehalterte Durchsichtscheibe nach Anspruch 10,
mit einer Glühlichtquelle, die in unmittelbarer Nähe einer Seite des Lichtdiffusors angeordnet ist, welche der Seite des Lichtdiffusors entgegengesetzt ist, die angrenzend an das durchlässige Display angeordnet ist.

14. Anzeigesystem für eine kopfgehalterte Durchsichtscheibe nach Anspruch 13,
das außerdem einen parabolischen Spiegel enthält, der so angeordnet ist, daß er das Licht der Glühlichtquelle auf den Lichtdiffusor richtet.

15. Anzeigesystem für eine kopfgehalterte Durchsichtscheibe nach Anspruch 9,
mit einem Elektroluminenz-Schirm, der angrenzend zu der Seite des lichtdurchlässigen Displays angebracht ist, die der dem Spiegel zugewandten Seite des Displays entgegengesetzt ist.

## Revendications

1. Système d'affichage pour un transparent de visualisation porté sur la tête (30, 30'', 72, 126) qui définit un champ de vision d'utilisateur, le système d'affichage comportant un moyen formant support (29, 29'') pour supporter ledit transparent pour monter ledit transparent sur la tête d'un utilisateur et un dispositif d'affichage (24, 24'', 42) pour afficher de l'information, ledit système d'affichage étant monté sur ledit moyen formant support et ledit système d'affichage étant utilisé avec un moyen pour produire des données représentant de l'information à afficher, ledit système d'affichage étant caractérisé par : un miroir (25, 25'', 53) pour collimater de la lumière pour projeter une image de ladite information à afficher à une certaine distance dudit utilisateur à la périphérie dudit champ de vision, ledit miroir recevant ladite information directement à partir dudit afficheur et ledit miroir étant placé à la périphérie dudit champ de vision pour permettre audit utilisateur de voir ladite image en regardant ledit miroir.

2. Système d'affichage pour un transparent de visualisation porté sur la tête selon la revendication 1, dans lequel la réflectivité dudit miroir est partiellement réfléchissante pour maintenir un contraste élevé entre l'image projetée de ladite information affichée et une scène observée à travers ledit transparent.

3. Système d'affichage pour un transparent de visualisation porté sur la tête, selon la revendication 1, dans lequel ledit miroir projette ladite image d'information affichée à une distance qui est plus petite que l'infini pour permettre à l'utilisateur d'accommoder visuellement rapidement ladite image tout en effectuant une activité nécessitant une mise au point à une distance plus petite que l'infini.

4. Système d'affichage pour un transparent de visualisation porté sur la tête selon la revendication 1, dans lequel ledit afficheur émet de la lumière vers ledit miroir, ledit système comprenant en outre un moyen de filtrage de couleur pour éliminer des composantes de couleur de l'environnement observé à travers ledit transparent, lesdites composantes de couleur éliminées étant différentes des composantes de couleur de la lumière émise par ledit moyen d'affichage.

5. Système d'affichage pour un transparent de visualisation porté sur la tête, selon la revendication 4, dans lequel ledit moyen de filtrage de couleur est disposé sur la face extérieure dudit transparent de visualisation.

6. Système d'affichage pour un transparent de visualisation porté sur la tête selon la revendication 1, dans lequel ledit transparent de visualisation porté sur la tête est formé d'une paire de verres, ledit moyen support formant la monture desdits verres.

7. Système d'affichage pour un transparent de visualisation porté sur la tête selon la revendication 6, dans lequel ledit moyen formant miroir est monté sur ladite monture.

8. Système d'affichage pour un transparent de visualisation porté sur la tête selon la revendication 1, dans lequel ledit moyen formant miroir et ledit transparent de visualisation forment un dispositif à double foyer.

9. Système d'affichage pour un transparent de visualisation porté sur la tête selon la revendication 1, dans lequel ledit afficheur comprend un afficheur à transmission de lumière.

10. Système d'affichage pour un transparent de visualisation porté sur la tête selon la revendication 9, dans lequel ledit afficheur comprend un diffuseur de lumière disposé d'un côté dudit afficheur à transmission, opposé audit miroir, ledit diffuseur fournissant un éclairement uniforme audit afficheur à transmission.

11. Système d'affichage pour un transparent de visualisation porté sur la tête selon la revendication 10, dans lequel ledit diffuseur de lumière reçoit la lumière ambiante pour une répartition uniforme sur ledit afficheur.

12. Système d'affichage pour un transparent de visualisation porté sur la tête selon la revendication 11, qui comprend un moyen pour réfléchir de la lumière provenant dudit diffuseur vers ledit afficheur.

13. Système d'affichage pour un transparent de visualisation porté sur la tête selon la revendication 10, comprenant une source de lumière à incandescence placée adjacente à un côté dudit diffuseur de lumière, opposé au côté dudit diffuseur de lumière qui est placé adjacent audit afficheur à transmission.

14. Système d'affichage pour un transparent de visualisation porté sur la tête selon la revendication 13, comprenant en outre un miroir parabolique disposé de manière à diriger la lumière issue de ladite source de lumière à incandescence vers ledit diffuseur de lumière.

15. Système d'affichage pour un transparent de visualisation porté sur la tête selon la revendication 9, comprenant une fenêtre électroluminescente disposée adjacente au côté dudit afficheur à transmission, opposé au côté dudit afficheur qui est en face dudit moyen formant miroir.
